# FASCICULE DE BREVET EUROPEEN

(11) **EP 1 972 465 B1**
(45) Date de publication et mention de la délivrance du brevet: **06.06.2012**
(21) Numéro de dépôt: 08153043.8
(22) Date de dépôt: 19.03.2008
(51) Int. Cl.: B60B 33/00, B60B 33/06

(54) **Pied de lit à roulette**
Rollbettfuß
Roller bed-foot

(30) Priorité: 19.03.2007 FR 0753908
(43) Date de publication de la demande: 24.09.2008
(73) Titulaire: Hill-Rom S.A.S., 56330 Pluvigner (FR)
(72) Inventeur: Duvert, Jean-Bernard, 56400, Auray (FR); Guguin, Pascal, 56400, Brech (FR); Ribera, Frédéric, 25000, Besancon (FR)
(74) Mandataire: Barbin le Bourhis, Joël

(56) Documents cités:
- CH-A5- 670 991
- DE-A1- 2 705 958
- US-A- 2 843 392

## Description

L'invention concerne un pied de lit à roulette selon la revendication 1 dans lequel ladite roulette est dissimulée et qui est équipé de moyens de freinage permettant l'immobilisation du lit. L'invention s'applique au domaine de certains lits médicalisés d'hôpitaux pour soins de longue durée ou de lits d'hospitalisation à domicile, ou encore de lits susceptibles d'équiper un établissement de gériatrie.

Certains pieds de lit à roulette sont connus des documents DE 2 705 958 et US 2 843 392.

Le but de l'invention est de proposer un pied de lit d'aspect classique mais comportant néanmoins une roulette complètement dissimulée à l'intérieur de celui-ci. Un lit équipé de tels pieds repose au sol par l'intermédiaire des roulettes mais celui-ci est normalement immobilisé par un mécanisme intégré au pied lui-même et comportant un levier susceptible de libérer un frein lorsqu'on désire déplacer le lit.

Plus particulièrement, l'invention concerne un pied de lit à roulette comprenant :
- un boîtier tubulaire destiné à être fixé à un cadre de lit et comportant une ouverture à son extrémité inférieure,
- une roulette fixée à l'intérieur de ce boîtier et ressortant au-delà de ladite ouverture,
- un mécanisme d'actionnement monté avec possibilité de déplacement longitudinal à l'intérieur dudit boîtier, caractérisé en ce qu'il comprend :
- une pédale articulée à la partie supérieure dudit boîtier et solidaire d'un levier coopérant avec une surface de came définie à la partie supérieure dudit mécanisme d'actionnement, et
- un patin de freinage monté à l'extrémité inférieure dudit mécanisme d'actionnement pour empêcher la libre rotation de la roulette lorsque ledit mécanisme d'actionnement est déplacé vers le bas sous l'action de la pédale.

De préférence, l'organe d'actionnement est constitué de deux éléments coulissant l'un par rapport à l'autre avec interposition entre eux d'un premier ressort. L'effort de freinage est communiqué audit patin de freinage par la compression de ce ressort.

Avantageusement, le mécanisme d'actionnement comporte un second ressort intercalé entre au moins l'un des éléments et un point d'appui fixe (par exemple le support de la roulette à l'intérieur du boîtier) pour permettre la remontée dudit organe d'actionnement à l'intérieur du boîtier, lors du relâchement de la pédale.

Selon un mode de réalisation préféré, le patin de freinage prend appui sur le sol tout autour de la roulette lorsque le mécanisme d'actionnement est déplacé vers le bas.

L'invention concerne aussi un lit équipé de pieds conformes à la définition ci-dessus.

L'invention sera mieux comprise et d'autres avantages de celle-ci apparaîtront mieux à la lumière de la description qui va suivre d'un mode de réalisation actuellement préféré d'un pied de lit conforme à son principe, donnée uniquement à titre d'exemple et faite en référence aux dessins annexés dans lesquels :
- la figure 1 est une vue schématique en élévation et en coupe d'un pied de lit conforme à l'invention, le système étant représenté en position de freinage de la roulette ; et
- la figure 2 est une vue analogue à la figure 1 où le système est représenté avec la roulette libre pour permettre le déplacement du lit.

Le pied de lit 11 tel que représenté a ici une forme générale essentiellement cylindrique et comporte un boîtier tubulaire 12 vertical, fixé au cadre de lit 13. Ce boîtier comporte une ouverture 14 à son extrémité inférieure. Une roulette 15 est fixée à un support 16 en forme de barrette, lui-même soudé à l'intérieur du boîtier 12. La roulette repose en permanence sur le sol 17 et ressort légèrement au-delà de l'ouverture 14 qui se situe à une faible distance au-dessus du sol. De ce fait, la roulette 15 est pratiquement invisible.

Un mécanisme d'actionnement 18 est installé à l'intérieur du boîtier 12, avec possibilité de déplacement axial. Il est constitué ici de deux éléments coaxiaux 19, 20 et de deux ressorts, respectivement un premier ressort 21 et un second ressort 22. L'ensemble du mécanisme d'actionnement 18 est guidé en translation et immobilisé en rotation grâce au support 16. En effet, l'élément inférieur 19 comporte deux ouvertures longitudinales opposées 24 par lesquelles il coulisse de part et d'autre du support 16. Par ailleurs, l'élément supérieur 20 et l'élément inférieur 19 coulissent l'un dans l'autre mais sont liés par des méplats longitudinaux en contact mutuel. Ainsi, l'élément 19 est immobilisé en rotation par le support 16 et l'élément 20 est immobilisé en rotation par l'élément 19, grâce à ces méplats. Autrement dit, l'ensemble constitué par les deux éléments 19, 20 peut coulisser longitudinalement dans le boîtier 12. Ledit premier ressort 21, de relativement forte raideur est interposé entre des épaulements des deux éléments 19, 20. Le second ressort 22, de plus faible raideur est interposé entre le support 16 et l'élément 20 qu'il sollicite verticalement vers le haut. Un système de clipsage unidirectionnel, non visible sur les dessins est prévu entre les éléments 19, 20 en sorte que lorsque l'élément 20 remonte dans le boîtier 12 sous la sollicitation du ressort 22, il entraîne avec lui l'élément 19.

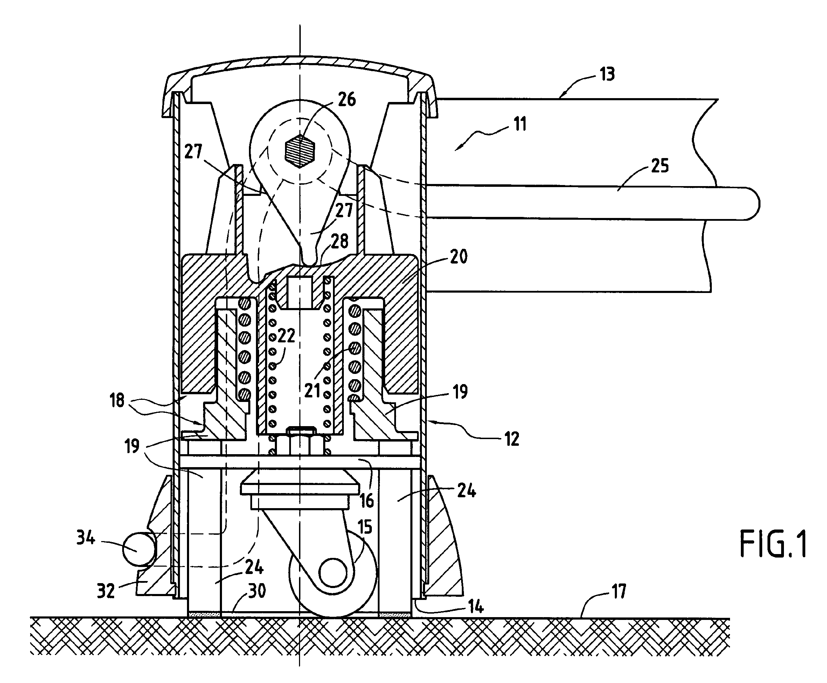

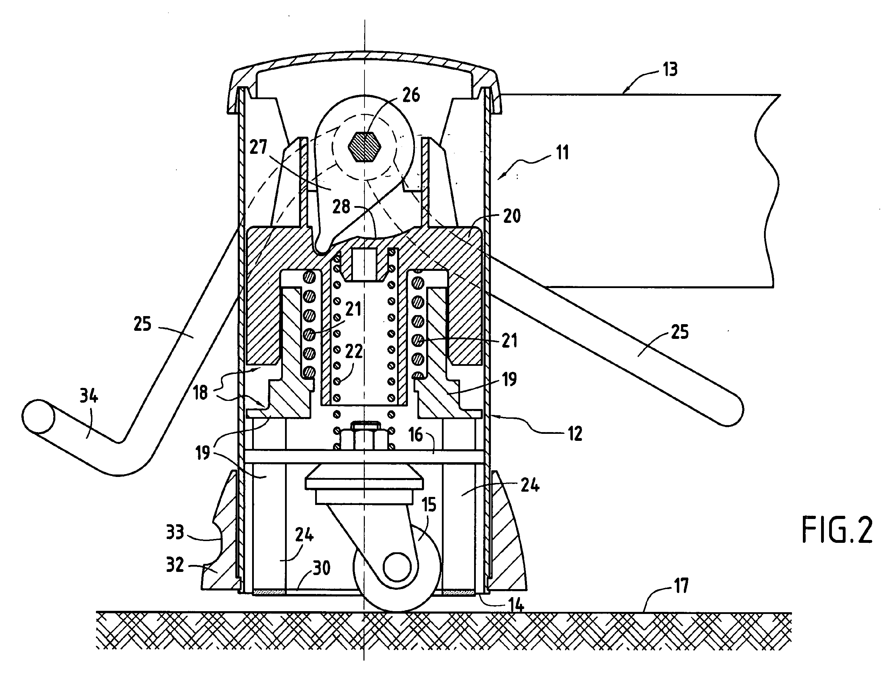

Une pédale 25 est articulée à la partie supérieure du boîtier 12 en étant fixée à une barre transversale 26 (ici à section hexagonale) montée transversalement dans le boîtier. Cette barre relie en fait deux pieds opposés du lit, pour un actionnement simultané des freins correspondants. La pédale 25 est solidaire, via la barre 26, d'un levier pivotant 27 qui coopère avec une surface de came 28 définie à la partie supérieure de l'élément 20. Dans l'une des positions (figure 1), le mécanisme d'actionnement est sollicité vers le sol avec compression du ressort 21. Dans l'autre position (figure 2) le mécanisme d'actionnement est rappelé vers le haut par le ressort 22.

L'élément 19 comporte à son extrémité inférieure un patin de freinage 30 en élastomère, capable de s'appliquer sur le sol 17 lorsque l'élément 19 est abaissé sous la sollicitation du ressort 21 comprimé par l'actionnement de la pédale 25. Le patin de freinage 30 constitue alors un frein s'exerçant sur le sol tout autour de la roulette 15.

Une collerette décorative 32, en matière plastique moulée, est fixée à l'extrémité inférieure du boîtier 12, tout autour de l'ouverture 14 de celui-ci. Elle comporte une encoche 33 recevant une boucle inférieure 34 de la pédale 25 lorsque celle-ci est dans la position de la figure 1, c'est-à-dire avec la roulette freinée.

En variante, le mécanisme d'actionnement pourrait être conformé pour venir s'appliquer directement sur la roulette 15 et non sur le sol tout autour de celle-ci, comme représenté dans l'exemple qui vient d'être décrit.

## Revendications

1. Pied de lit à roulette comprenant:
- un boîtier tubulaire (12) destiné à être fixé à un cadre de lit et comportant une ouverture (14) à son extrémité inférieure,
- une roulette (15) fixée à l'intérieur de ce boîtier ressortant au-delà de ladite ouverture,
- un mécanisme d'actionnement (18) monté avec possibilité de déplacement longitudinal à l'intérieur dudit boîtier, **caractérisé en ce qu'**il comprend :
- une pédale (25) articulée à la partie supérieure dudit boîtier et solidaire d'un levier (27) coopérant avec une surface de came définie à la partie supérieure dudit mécanisme d'actionnement, et
- un patin de freinage (30) monté à l'extrémité inférieure dudit mécanisme d'actionnement pour empêcher la libre rotation de la roulette lorsque ledit mécanisme d'actionnement est déplacé vers le bas sous l'action de la pédale.

2. Pied de lit selon la revendication 1, **caractérisé en ce que** ledit mécanisme d'actionnement (18) comporte deux éléments (19, 20) coulissant l'un par rapport à l'autre avec interposition entre eux d'un premier ressort (21), l'effort de freinage étant communiqué audit patin de frein par la compression dudit ressort.

3. Pied de lit selon la revendication 1 ou 2, **caractérisé en ce que** ledit mécanisme d'actionnement comporte un second ressort (22) intercalé entre ledit mécanisme d'actionnement et un point d'appui fixe pour permettre la remontée dudit mécanisme d'actionnement à l'intérieur du boîtier, au relâchement de la pédale.

4. Pied de lit selon l'une des revendications précédentes, **caractérisé en ce que** ledit patin de freinage (30) prend appui sur le sol autour de la roulette, lorsque le mécanisme d'actionnement est déplacé vers le bas.

5. Pied de lit selon l'une des revendications 1 à 3, **caractérisé en ce que** ledit patin de freinage est conformé pour prendre appui sur la roulette lorsque ledit mécanisme d'actionnement est déplacé vers le bas.

6. Lit, **caractérisé en ce qu'**il est équipé de pieds selon l'une des revendications précédentes.

## Claims

1. A bed leg with a caster, comprising:
- a tubular housing (12) adapted to be attached to a bed frame and comprising an opening (14) at its lower end,
- a caster attached to the inside of the housing and projecting from said opening,
- an actuating mechanism (18) mounted so as to be able to move longitudinally inside said housing,
**characterized in that** it comprises:
- a pedal (25) articulated to an upper part of said housing and joined to a lever (27) cooperating with a cam surface defined on an upper part of said actuating mechanism, and
- a braking pad (30) mounted on a lower end of said actuating mechanism so as to prevent the free rotation of the caster when said actuating mechanism is moved downward under the action of the pedal.

2. The bed leg according to claim 1, **characterized in that** said actuating mechanism (18) comprises two elements (19, 20) that slide relative to each other, with a first spring (21) interposed between them, a braking force being communicated to said braking pad by the compression of said spring.

3. The bed leg according to claim 1 or 2, **characterized in that** it comprises a second spring (22) interposed between said actuating mechanism and a fixed support point so as to allow said actuating mechanism to move back up into the housing when the pedal is released.

4. The bed leg according to any one of the preceding claims, wherein said braking pad (30) rests on a floor around the caster when the actuating mechanism is moved downward.

5. The bed leg according to any one of claims 1 to 3, **characterized in that** said braking pad is shaped so as to press on the caster when said actuating mechanism is moved downward.

6. A bed, **characterized in that** it is equipped with legs according to any one of the preceding claims.

## Patentansprüche

1. Fuß eines Rollbetts, umfassend:
- ein rohrförmiges Gehäuse (12), das dazu bestimmt ist, an einem Bettrahmen befestigt zu werden, und das an seinem unteren Ende eine Öffnung (14) aufweist,
- eine innerhalb dieses Gehäuses befestigte Rolle (15), die über die Öffnung hinausragt,
- einen Betätigungsmechanismus (18), der mit der Möglichkeit einer Längsbewegung innerhalb des Gehäuses angebracht ist,
**dadurch gekennzeichnet, daß** er umfaßt:
- ein Pedal (25), das an dem oberen Teil des Gehäuses angelenkt und mit einem Hebel (27) fest verbunden ist, der mit einer Nockenfläche zusammenwirkt, die am oberen Teil des Betätigungsmechanismus definiert ist, und
- einen Bremsschuh (30), der an dem unteren Ende des Betätigungsmechanismus angebracht ist, um das freie Drehen der Rolle zu verhindern, wenn der Betätigungsmechanismus unter der Wirkung des Pedals nach unten bewegt wird.

2. Bettfuß nach Anspruch 1, **dadurch gekennzeichnet, daß** der Betätigungsmechanismus (18) zwei Elemente (19, 20) umfaßt, die unter Einfügen einer ersten Feder (21) zwischen ihnen sich zueinander verschieben lassen, wobei die Bremskraft durch das Einfedern der Feder auf den Bremsschuh übertragen wird.

3. Bettfuß nach Anspruch 1 oder 2, **dadurch gekennzeichnet, daß** der Betätigungsmechanismus eine zweite Feder (22) umfaßt, die zwischen dem Betätigungsmechanismus und einer festen Auflagestelle eingefügt ist, um bei Loslassen des Pedals das Hochfahren des Betätigungsmechanismus innerhalb des Gehäuses zu ermöglichen.

4. Bettfuß nach einem der vorhergehenden Ansprüche, **dadurch gekennzeichnet, daß** der Bremsschuh (30) sich um die Rolle am Boden abstützt, wenn der Betätigungsmechanismus nach unten bewegt wird.

5. Bettfuß nach einem der Ansprüche 1 bis 3, **dadurch gekennzeichnet, daß** der Bremsschuh gestaltet ist, um sich an der Rolle abzustützen, wenn der Betätigungsmechanismus nach unten bewegt wird.

6. Bett, **dadurch gekennzeichnet, daß** es mit Füßen nach einem der vorhergehenden Ansprüche ausgestattet ist.
